# EUROPEAN PATENT SPECIFICATION

(11) **EP 2 036 809 B1**
(45) Date of publication and mention of the grant of the patent: **30.12.2009**
(21) Application number: 08009949.2
(22) Date of filing: 30.05.2008
(51) Int. Cl.: B62K 19/46, B62J 1/12

(54) **Straddle-type vehicle**
Grätschsitz-Fahrzeug
Véhicule de type à enfourcher

(30) Priority: 14.09.2007 JP 2007239293
(43) Date of publication of application: 18.03.2009
(73) Proprietor: Yamaha Hatsudoki Kabushiki Kaisha, Iwata-shi, Shizuoka 438-8501 (JP)
(72) Inventor: Hirakawa, Nobuhiko, Iwata-shi Shizuoka-ken 438-8501 (JP); Kanou, Yasunobu, Iwata-shi Shizuoka-ken 438-8501 (JP); Ono, Takashi, Iwata-shi Shizuoka-ken 438-8501 (JP)
(74) Representative: Grünecker, Kinkeldey, Stockmair & Schwanhäusser Anwaltssozietät

(56) References cited:
- EP-A- 0 404 195
- EP-A- 0 445 458
- JP-A- 5 345 582
- US-A- 4 413 700

## Description

The present invention relates to a straddle type vehicle, in particular a motorcycle, including a housing box disposed on a vehicle body frame and a seat disposed in a manner such that it is capable of opening and closing an upper end opening of the housing box.

JP-A-Hei 5-345582 discloses a scooter type motorcycle, wherein a front end or a rear end of a straddle type seat is supported by a vehicle body frame via a hinge rotatably in the up-and-down direction, and a housing box, a fuel tank, and so forth are disposed in a space in the vehicle body frame beneath the seat.

In the case that the seat is swingably supported by the vehicle body frame via the hinge, a structure for receiving a load from a rider seated on the seat appears to be beneficial. However, no particular structure for receiving such a load is disclosed in a conventional motorcycle of the available prior art. Therefore, improvement in this point is required.

Now, it is considered possible that an opening of the housing box receives the load acting on the seat. However, in such a construction, it is required to form the load receiving part into an opening, and this results in a problem that a capacity of the box becomes small.

The present invention is made in consideration of such a conventional situation, and its objective is to provide a straddle type vehicle capable of receiving a load acting on the seat without making a capacity of the box smaller.

According to the present invention, said objective is solved by a straddle type vehicle having the combination of features of independent claim 1.

Preferably, the load receiving member has a shape corresponding to a shape of an outer surface of the tank.

Further, preferably a space is formed between the load receiving member and the tank such that, preferably, the load receiving member covering at least a portion of the tank does not contact same, even when a load is applied to the seat.

Still further, preferably the load receiving member has at least one, preferably a plurality of, openings.

Yet further still, preferably a cap for opening or closing a liquid inlet of the tank is positioned on any of the openings.

Preferably, a seat locking mechanism is disposed between the storage space of the housing box and the load receiving member.

Further, preferably a lock main body of the seat locking mechanism being disposed to the vehicle body frame is mounted on a locking mechanism retaining part which is, preferably integrally, formed on the load receiving member and/or the housing box.

Still further, preferably the load receiving member comprises mounting parts disposed at several locations in longitudinal direction of the straddle type vehicle, said mounting parts being preferably supported by the vehicle body frame.

Yet further still, preferably at least a seat contacting part, with which the seat is brought in contact when being closed, is disposed in at least a portion of the load receiving member between the mounting parts.

According to a preferred embodiment, the mounting parts include at least a front mounting part and at least a rear mounting part, the seat contacting part being disposed between the front and the rear mounting parts.

According to another preferred embodiment, the mounting parts are disposed on a fore-and-aft frame extending in longitudinal direction of the straddle type vehicle, wherein the fore-and-aft frame preferably forms a substantially upwardly convex arch on the load receiving member.

Preferably, the fore-and-aft frame includes right and left fore-and-aft frames disposed on both right and left sides in width direction of the straddle type vehicle, the right and left fore-and-aft frames being preferably coupled together by at least a coupling part extending in the width direction of the straddle type vehicle.

Further, preferably a plurality of the coupling parts are disposed in longitudinal direction of the straddle type vehicle at prescribed intervals.

Still further, preferably the load receiving member is integrally formed on the housing box.

In the following, the present invention is explained in greater detail with respect to several embodiments thereof in conjunction with the accompanying drawings, wherein:
- FIG. 1: is a side view of a scooter type motorcycle for describing an embodiment;
- FIG. 2: is a plan view of the motorcycle;
- FIG. 3: is a side view of a housing box and a seat disposed on a vehicle body frame of the motorcycle;
- FIG. 4: is a side view of an engine unit and a fuel tank disposed on the vehicle body frame;
- FIG. 5: is a plan view of the fuel tank;
- FIG. 6: is a side view of a load receiving member disposed in front of the housing box;
- FIG. 7: is a side view of a vicinity of a hinge member of the seat;
- FIG. 8: is a side view of the housing box;
- FIG. 9: is a plan view of the housing box;
- FIG. 10: is a cross-sectional view of the housing box (a cross-sectional view taken along a line X-X in FIG. 9);
- FIG. 11: is a plan view of a tank bracket of the vehicle body frame;
- FIG. 12: is a cross-sectional view of the tank bracket (a cross-sectional view taken along a line XII-XII in FIG. 5);
- FIG. 13: is a plan view of the load receiving member; and
- FIG. 14: is a cross-sectional view of the load receiving member (a cross-sectional view taken along a line XIV-XIV in FIG. 9).

Among others, the following reference signs are used in the figures:
1: scooter type motorcycle (straddle type vehicle)
2: vehicle body frame
9: seat
10: housing box
10a: volume part (storage space)
10a': upper end opening
10b: load receiving member
10g' through 10j': opening
10k: fore-and-aft frame
10m through 10q: coupling part
10r: locking mechanism retaining part
10s: front mounting part
10t: rear mounting part
10u: seat contacting part
11: fuel tank
11 a: fuel cap
21: seat locking mechanism
21 a: lock main body
50: hinge member

An embodiment of a straddle type vehicle will be described hereafter with reference to drawings.

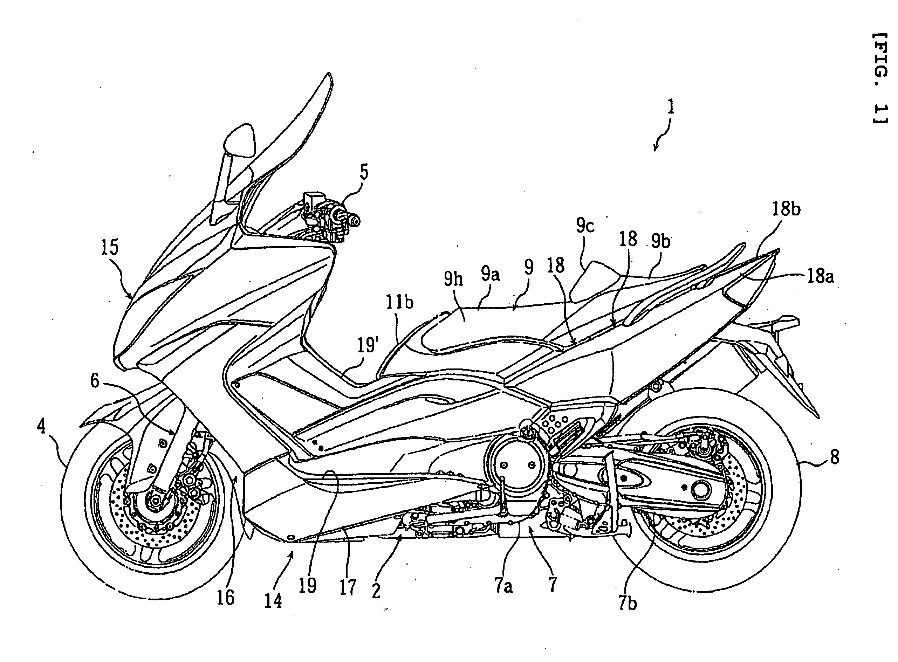

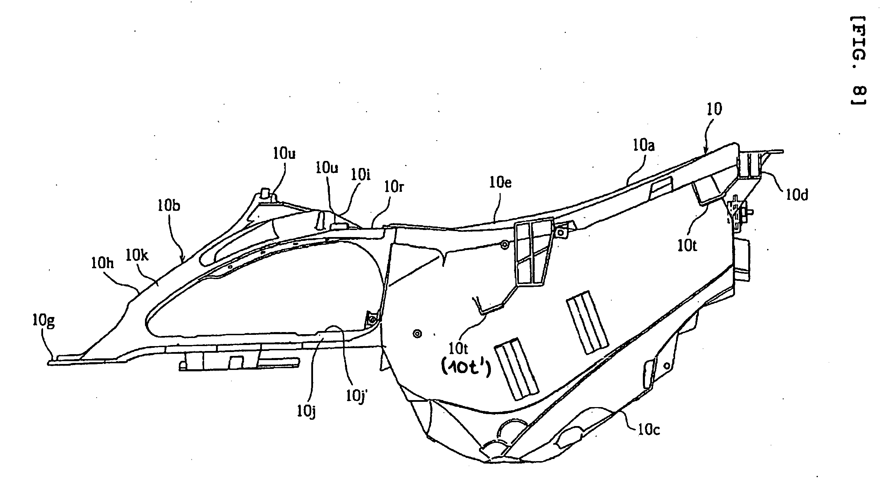

FIGs. 1 through 14 are drawings for describing a motorcycle (straddle type vehicle) according to an embodiment. In general, a straddle type vehicle has a body frame and a seat on which a rider can be seated straddling the body frame when being seated. The fore-and-aft (longitudinal direction), and right and left directions in the descriptions in this embodiment are the directions in the view of a rider seated on a seat unless particularly mentioned.

In the drawings, reference numeral 1 denotes a scooter type motorcycle. The motorcycle 1 includes an underbone type vehicle body frame 2, front forks 6 supported by a head pipe (not shown) positioned at a front end of the vehicle body frame 2 steerably to the right and the left in which lower ends support a front wheel 4 and steering handlebars 5 are fixed to upper ends, and an engine unit 7 installed in a center part of the vehicle body frame 2 in the fore-and-aft direction in which a rear wheel 8 is disposed at a rear end, and a straddle type seat 9 for tandem riding installed in a part of the vehicle body frame above the engine unit 7.

The motorcycle 1 includes a housing box 10 disposed on the vehicle body frame 2, the seat 9 disposed in a manner such that it is capable of opening and closing an upper end opening 10a' which opens upward of the housing box 10, a fuel tank 11 disposed in front of the housing box 10, and a load receiving member 10b disposed to surround the fuel tank 11.

The vehicle body frame 2 includes a front frame 12' having right and left front frame sections 12, 12 extending obliquely rearward downward from the head pipe, and a rear frame 13' having right and left rear frame sections 13, 13 extending obliquely rearward upward while continuing from the right and left front frame sections 12.

The right and left front frame sections 12, 12 have right and left sidewalls 12a, 12a extending in the vehicle fore-and-aft direction and the up-and-down direction. The right and left sidewalls 12a are disposed to cover a cylinder head 7c of the engine unit 7 from right and left sides thereof, and cover an air cleaner 24 disposed in front of the engine unit 7 from right and left sides thereof.

The right and left rear frame sections 13, 13 have right and left side surfaces 13a, 13a of which an interval in the vehicle width direction becomes larger toward upside as seen in a horizontal cross section perpendicularly intersecting the center line in the vehicle fore-and-aft direction, a front crossbar 13e, middle crossbars 13d, and a rear cross bar 13b for coupling front ends of upper edges of the right and left side surfaces 13a together, lower edges together, and rear ends of the upper edges together, respectively.

A seat supporting part 13b' protruding rearward from a rear end surface 9g of the seat 9 is formed on the rear crossbar 13b. Reference numeral 51 denotes a tail light mounting bracket fixed to an upper part of a rear end of the seat supporting part 13b' by bolting.

The engine unit 7 has an engine main body 7a fixed to the vehicle body frame 2, and a transmission casing 7b supported by the engine main body 7a swingably in the up-and-down direction for transmitting driving force of the engine to the rear wheel 8 pivotally supported at the rear end thereof.

The vehicle body frame 2 is surrounded by a vehicle body cover 14 made of resin. The vehicle body cover 14 includes a front cover 15 for covering right, left and front sides of the front forks 6, leg shields 16 disposed in the rear of the front cover 15 for covering front sides of legs of a rider, right and left side covers 18, 18 for covering a lower periphery of the seat 9 and right and left sides of the engine main body 7a, and right and left under covers 17, 17 for covering lower sides of the side covers 18.

Right and left low-step type footboards 19, 19 for forming footrests for a rider are disposed between the right and left side covers 18 and the respective under covers 17. A center tunnel swelling out upward in a tunnel shape is formed between the right and left footboards 19, 19.

The fuel tank 11 is installed in a part between the front ends of the right and left rear frame sections 13 and above the engine main body 7a. The fuel tank 11 is constructed with a lower tank 11c and an upper tank 11 d. Flanges 11e, 11e of both the tanks are welded together.

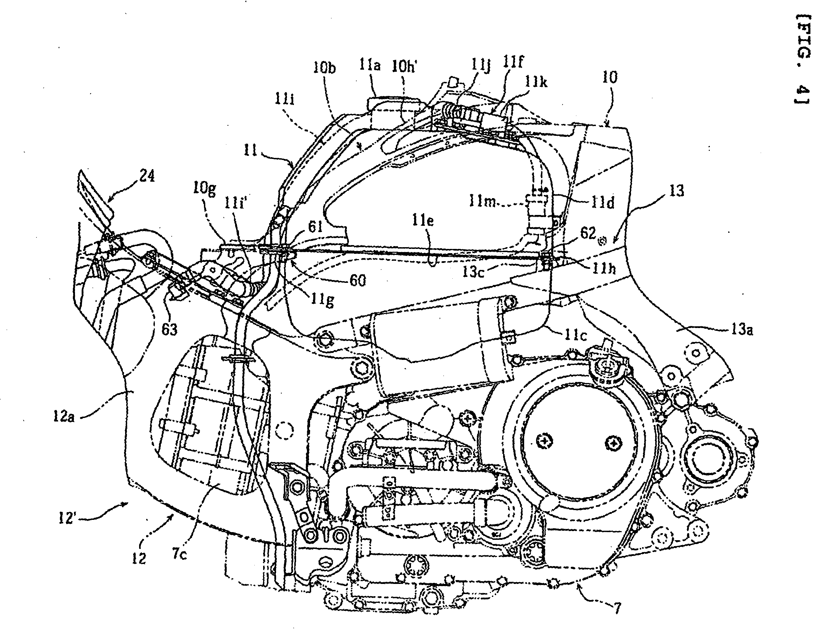

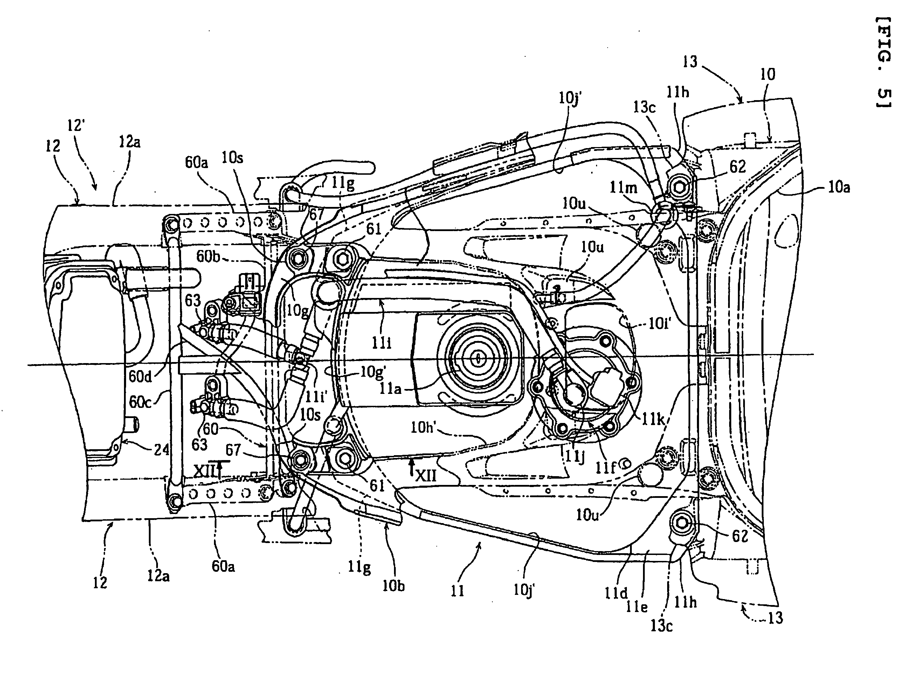

Right and left front ends 11 g, 11 g of the flange 11 e are fixed to a tank bracket 60 fixed to upper surfaces of the right and left front frame sections 12 by right and left front bolts 61, 61. Right and left rear ends 11 h, 11 h are fixed to bosses 13c, 13c formed on upper surfaces of the right and left rear frame sections 13 by right and left rear bolts 62, 62 (see FIGs. 4 and 5).

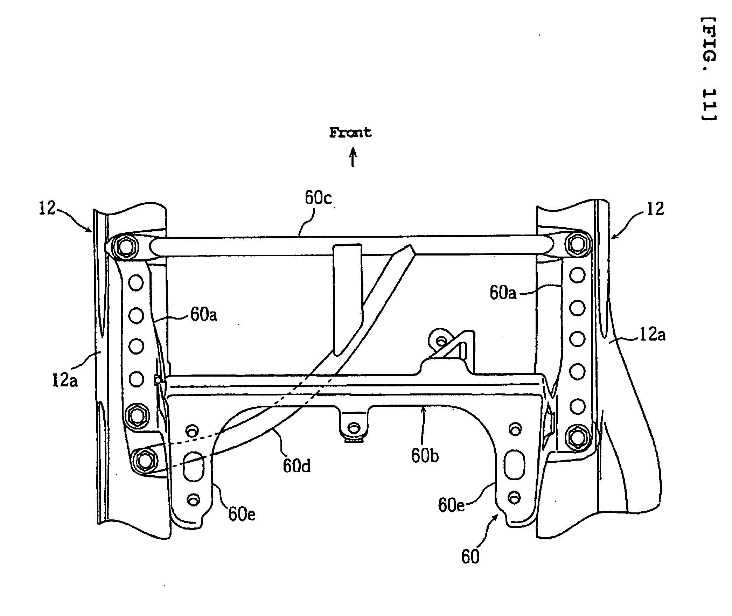

As shown in FIGs. 5 and 11, the tank bracket 60 includes right and left legs 60a, 60a fixed to the upper surfaces of the right and left front frame sections 12 by bolting, a bracket main body 60b integrally coupling rear ends of the right and left legs 60a together and extending upward from the right and left legs 60a, a cross pipe 60c for coupling front ends of the right and left legs 60a together, and a coupling pipe 60d for coupling a midway part of the cross pipe 60c in the vehicle width direction with the rear end of the left leg 60a. The right and left front ends 11 g, 11 g of the fuel tank 11 are mounted on right and left mounting seats 60e, 60e of the bracket main body 60b.

A fuel cap 11 a for opening or closing a fuel inlet is attached to an upper wall of the fuel tank 11. The fuel cap 11 a is exposed upward by laying down a lid 11 b disposed in front of the seat 9 forward around a lower edge thereof.

A fuel pump 11f is inserted in a part of the fuel tank 11 in the rear of the fuel cap 11a. Fuel in the fuel tank 11 is supplied from the fuel pump 11f to fuel injecting valves 63, 63 mounted on respective cylinders in the cylinder head 7c via a fuel supplying hose 11i.

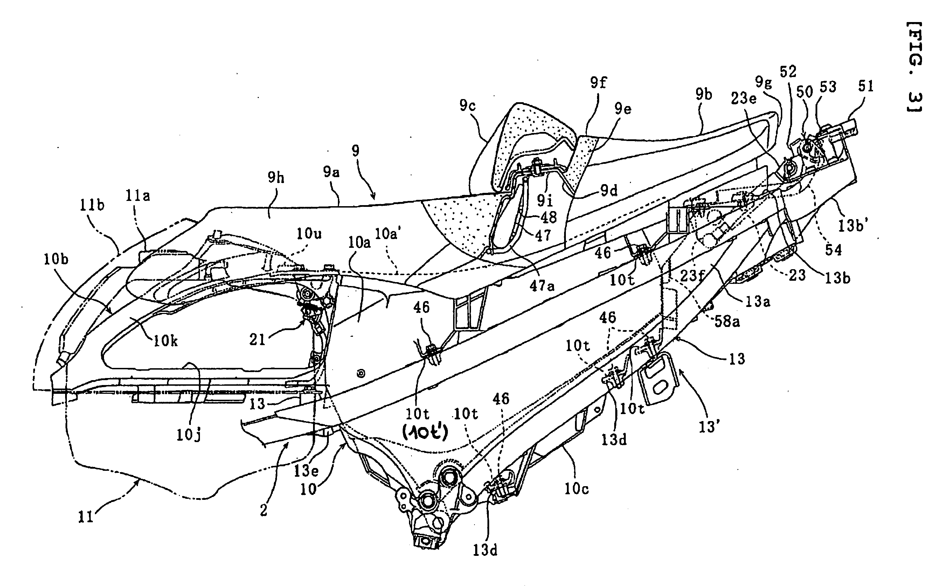

As shown in FIG. 3, the seat 9 is constructed in a manner such that a seat cushion 9e is disposed on a seat bottom plate 9d made of resin and an outer surface of the seat cushion 9e is covered by a skin 9f, and that a front seat 9a on which a rider is seated and a rear seat 9b on which a passenger is seated are integrally formed.

The seat 9 is formed in a manner such that the rear seat 9b is positioned higher than the front seat 9a, and is slightly sloped down to the forward as seen from a side.

Narrowed parts 9h, 9h narrowed to have a width in the vehicle width direction smaller than a rear part are formed on right and left sides of a front part of the front seat 9a. This improves leg fittingness of a rider.

A backrest 9c for supporting the hip of a rider is disposed on a boundary between the front seat 9a and the rear seat 9b. A housing part 9i swelling out in an upwardly convex shape is formed in a part of the seat bottom plate 9d below the backrest 9c. A toolkit 47 and a helmet hanger 48 are housed in the housing part 9i and fixed thereto by a rubber band 47a.

A rear end of the seat 9 is supported by the right and left rear frame sections 13 via a hinge member 50, and thereby the seat 9 is swingable in the up-and-down direction.

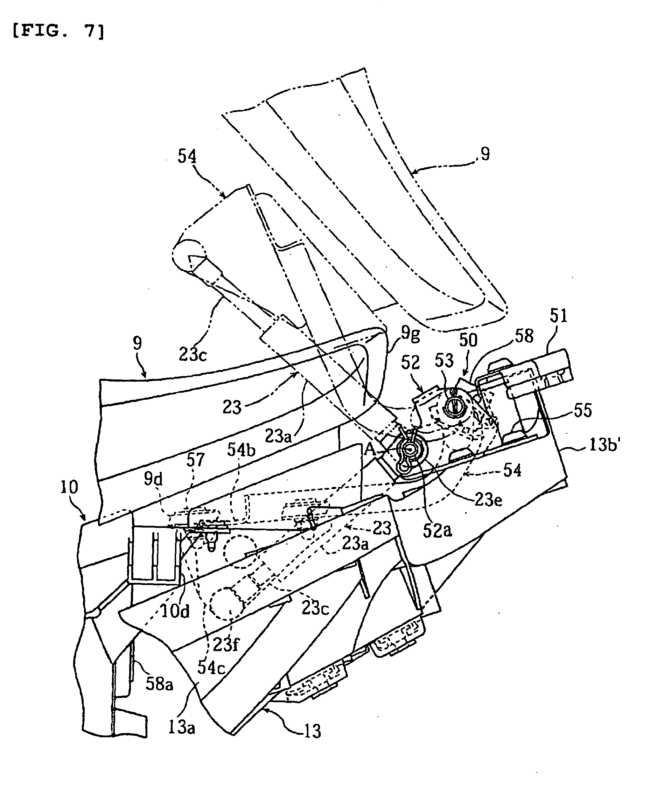

As shown in FIG. 7, the hinge member 50 includes right and left hinge plates 52, 52 fixed to the seat supporting part 13b', a cylindrical hinge shaft 53 pivotally supported between the right and left hinge plates 52, and right and left hinge arms 54, 54 fixed to the hinge shaft 53 and the seat bottom plate 9d of the seat 9 while extending forward in the vehicle from the hinge shaft 53.

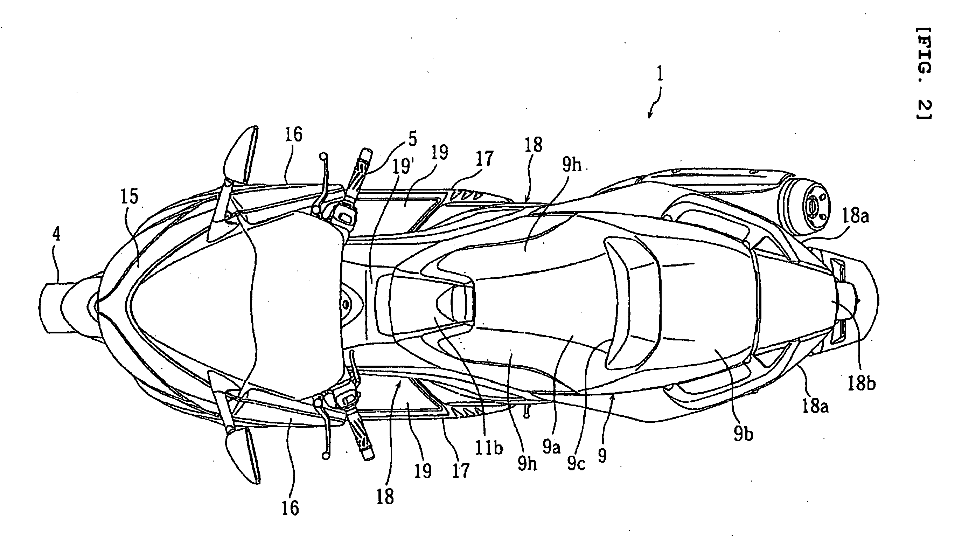

The seat supporting part 13b' and the hinge member 50 are covered by rear ends 18a, 18a of the right and left side covers 18 and a tail cover 18b disposed between upper ends of the right and left rear ends 18a (see FIGs. 1 and 2).

Right and left dampers 23, 23 for applying urging force in an opening direction to the seat 9 are disposed between the right and left rear frame sections 13 and the seat 9.

The right and left dampers 23 are stroke types that generate urging force in the axial direction, and disposed generally in the vehicle fore-and-aft direction on both the right and left sides in the vehicle width direction.

Each of the right and left dampers 23 has a cylinder 23a in a cylindrical shape having a bottom which is filled with hydraulic oil and high-pressure gas, a piston (not shown) slidably inserted into the cylinder 23a, and a piston rod 23c of which one end is connected to the piston and the other end protrudes outward from the cylinder 23a.

In the right and left dampers 23, coupling brackets 23e connected to rear ends of the cylinders 23a are coupled with damper supporting parts 52a of the right and left hinge plates 52 swingably in the up-and-down direction, and ball joints 23f connected to the piston rods 23c are coupled with lower ends 54c of the right and left hinge arms 54 swingably in the up-and-down and the right and left directions.

The right and left dampers 23 are disposed in the rear of a rear end surface of the housing box 10, in vicinities of insides of the right and left rear frame sections 13, 13, and below the rear seat 9b.

Each of the dampers 23 is disposed to be sloped down to the forward in a manner such that the piston rod 23c is positioned below the cylinder 23a, specifically, that the damper 23 is inclined at 40° to the horizontal line.

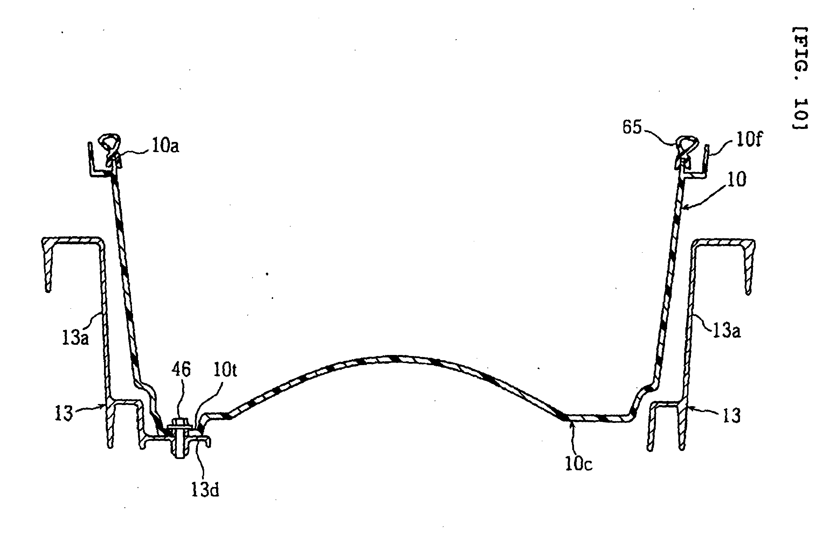

The housing box 10 is disposed between the right and left rear frame sections 13, 13, and has a bowl-shaped volume part (storage space) 10a with a capacity capable of housing a helmet and so forth. A sealing member 65 contacting with the seat bottom plate 9d of the seat 9 is attached on the upper end opening 10a' of the volume part 10a. Further, a gutter part 10f for discharging water flown down along the seat 9 to the outside is formed outside the opening 10a' in a curved shape (see FIG. 10).

The upper end opening 10a' of the housing box 10 is positioned above upper edges of the right and left rear frame sections 13, 13. A bottom wall 10c has a shape generally corresponding to lower edges of the right and left rear frame sections 13.

The load receiving member 10b for receiving a load from a rider acting on the seat 9 is disposed in front of the volume part 10a of the housing box 10. The load receiving member 10b is integrally formed on a front wall of the housing box 10 to extend forward from the housing box 10.

The load receiving member 10b has a generally bowl-like shape generally corresponding to a shape of an outer surface of the upper tank 11 d of the fuel tank 11. The load receiving member 10b covers the upper tank 11d while having a space interposed between them. Specifically, the load receiving member 10b has a front flat board 10g positioned at a front end thereof, a front wall 10h extending obliquely rearward upward while continuing from the front flat board 10g, a rear wall 10i extending rearward downward while continuing from the front wall 10h, and right and left sidewalls 10j, 10j formed to swell outward as progressing downward from the rear wall 10i and the front wall 10h while passing through right and left side parts. The rear wall 10i and the rear edges of the right and left sidewalls 10j, 10j are integrally connected with the gutter part 10f of the housing box 10.

Right and left seat locking mechanisms 21, 21 for locking the seat 9 in a fully closed position are disposed between the housing box 10 and the load receiving member 10b.

Each of the right and left seat locking mechanisms 21 has a lock main body 21a mounted on the load receiving member 10b and a generally U-shaped striker plate 21 b mounted on a center part in the fore-and-aft direction of the seat bottom plate 9d of the front seat 9a.

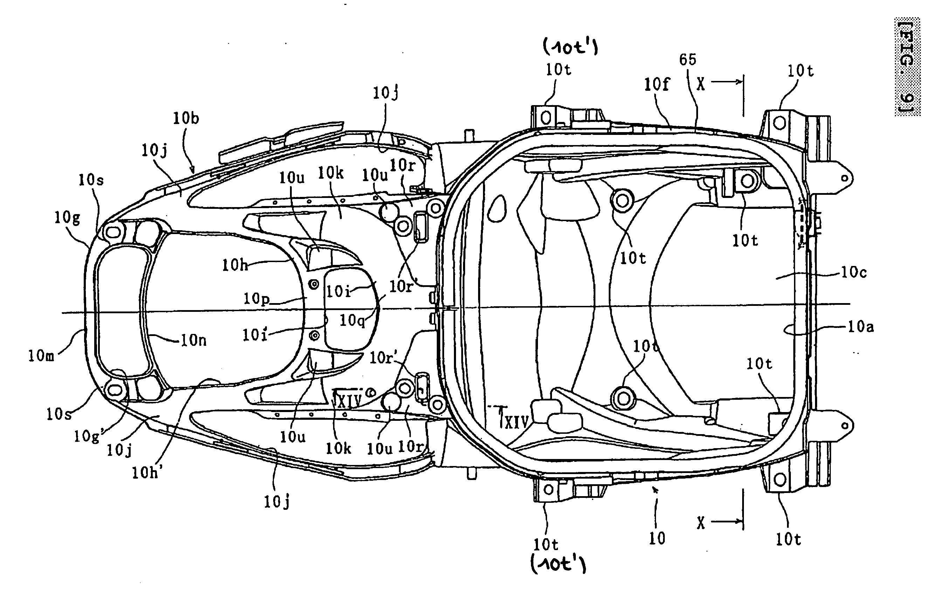

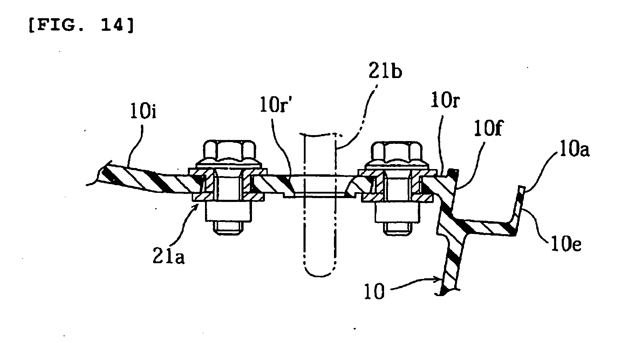

Locking mechanism retaining parts 10r, 10r thicker than the other parts are formed at right and left rear ends of the rear wall 10i of the load receiving member 10b. The lock main bodies 21a are fixed to lower surfaces of the right and left locking mechanism retaining parts 10r by bolting (see FIGs. 9 and 14).

Lock holes 10r' that the striker plates 21 b enter are formed on the right and left locking mechanism retaining parts 10r. When the seat 9 is closed, the striker plates 21 b enter the lock holes 10r' and engage with the lock main bodies 21a. When the locking mechanisms are unlocked by operation with a key (not shown), the striker plates 21 b are released from the engagement, and the seat 9 can be opened and closed.

The load receiving member 10b has a horizontally long front opening 10g' formed on the front flat board 10g extending in the vehicle width direction, a central opening 10h' formed on the front wall 10h expanding over a generally entire area thereof, a rear opening 10i' formed on a front part of the rear wall 10i, and further right and left openings 10j', 10j' formed on the right and left sidewalls 10j expanding over generally entire areas of them.

A bifurcating part 11i' of the fuel supplying hose 11 i is positioned to be exposed upward in the front opening 10g'. The fuel cap 11 a is positioned to protrude upward and a part of the fuel tank 11 swells outside in the central opening 10h'. A fuel discharging port 11j of the fuel pump 11f and a power source connector 11k are positioned to be exposed upward in the rear opening 10i'. Further, a valve assembly 11 m is positioned to be exposed to a side in the left opening 10j'.

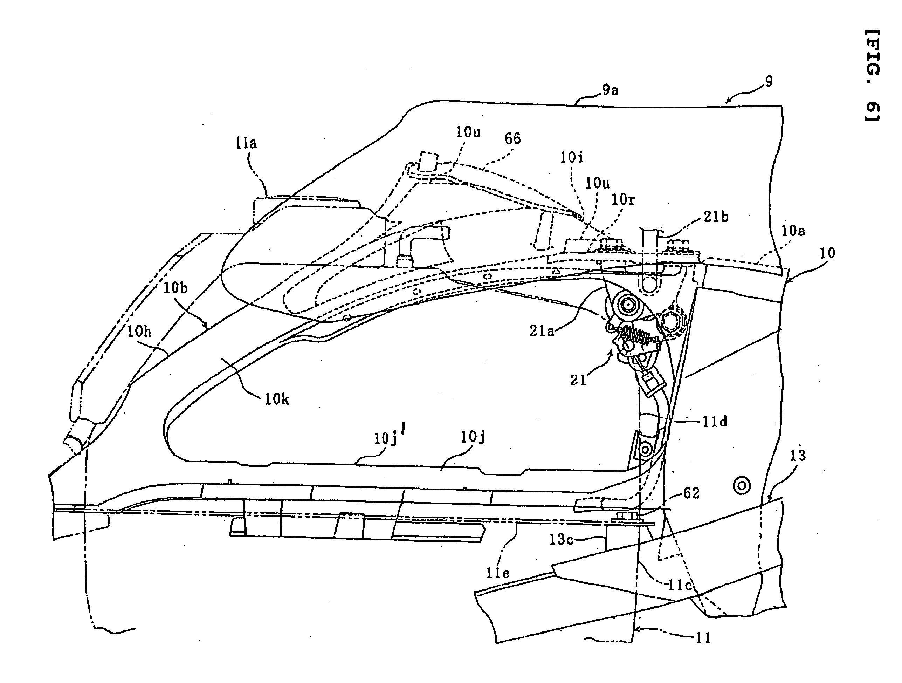

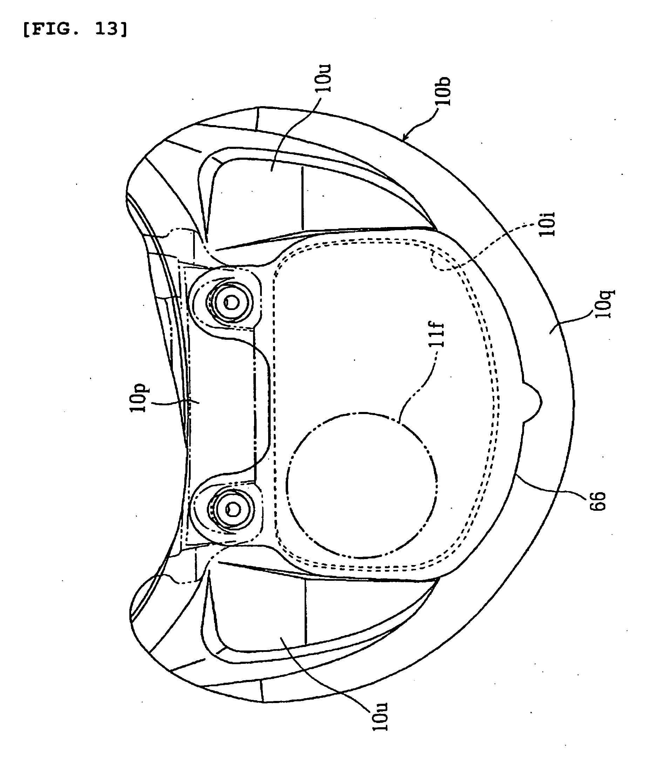

A seat cap 66 for preventing exposure of the fuel pump 11f when the seat 9 is opened is attached on the rear opening 10i' (see FIGs. 6 and 13).

The openings 10g' through 10j' are formed, and consequently the load receiving member 10b is a frame structure constructed with frames forming the peripheries of the openings. In other words, the load receiving member 10b is a structure having right and left fore-and-aft frames 10k, 10k forming upwardly convex arches and extending in the fore-and-aft direction in batten plate shapes, and first through fourth coupling parts 10m, 10n, 10p, and 10q for coupling the right and left fore-and-aft frames 10k together. The first through fourth coupling parts 10m through 10q extend in the vehicle width direction, and are disposed at intervals in the vehicle fore-and-aft direction.

A front mounting part 10s is formed on each of right and left front parts of the load receiving member 10b. Four rear mounting parts 10t are formed on each of right and left sides of the housing box 10. In this embodiment, rear mounting parts 10t' (See FIG. 3) positioned front and up among the rear mounting parts 10t do not only function as the mounting parts of the housing box but also as mounting parts for mounting the load receiving member 10b on the vehicle body frame. A plurality of seat contacting parts 10u for receiving a seat load due to contact with the seat 9, specifically, four seat contacting parts 10u, are formed between the right and left front mounting parts 10s and the right and left rear mounting parts 10t' of the load receiving member 10b.

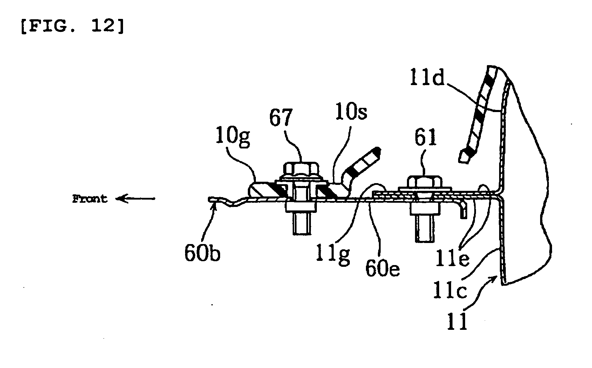

The right and left front mounting parts 10s are disposed at right and left ends of the front flat boards 10g, and fixed to the right and left mounting seats 60e of the tank bracket 60 by bolts 67, 67. The right and left front mounting parts 10s are disposed in front of the right and left front ends 11 g, 11 g of the fuel tank 11 (see FIGs. 5 and 12).

Pairs of the upper front and upper rear rear mounting parts 10t, 10t among the right and left rear mounting parts 10t are formed on right and left sidewalls of the housing box 10 to contact with the upper surfaces of the right and left rear frame sections 13, 13. A pair of the lower front and lower rear rear mounting parts 10t, 10t are formed on the bottom wall 10c of the housing box 10 to contact with upper surfaces of the middle crossbars 13d of the right and left rear frame sections 13. Each of the rear mounting parts 10t is fixed to a part on the right or left rear frame section 13 with which it contacts by a bolt 46.

Each of the seat contacting parts 10u is positioned on the right or left fore-and-aft frame 10k. Specifically, the right and left front seat contacting parts 10u, 10u are disposed in parts in which the right and left fore-and-aft frames 10k and the third coupling part 10p connect together. The right and left rear seat contacting parts 10u, 10u are disposed on the right and left locking mechanism retaining parts 10r of the fourth coupling part 10q.

The right and left front seat contacting parts 10u are disposed closer to a center of the vehicle body. The right and left rear seat contacting parts 10u are disposed more outward than the front seat contacting parts 10u in the vehicle width direction.

The seat contacting parts 10u are disposed in middle parts in the fore-and-aft direction between the front mounting parts 10s and the rear mounting parts 10t' positioned front and up (see FIG. 3), and positioned generally right below a part of the front seat 9a in which a rider is seated.

As described above, the load receiving member 10b is formed into a shape covering the fuel tank 11 without contacting with the fuel tank 11, that is, a shape such that a space is formed between the load receiving member 10b and the fuel tank 11 although the seat load is applied, and is mounted on the vehicle body frame 2. Thereby, the load from the seat 9 is not transmitted to the fuel tank 11. The load acting on the seat 9 is transmitted to the vehicle body frame 2 in a state that the right and left fore-and-aft frame parts 10k are slightly elastically deformed.

In this embodiment, the rear end of the seat 9 is supported by the seat supporting part 13b' of the right and left rear frame sections 13 via the hinge member 50 swingably in the up-and-down direction. The load receiving member 10b for receiving the load from a rider acting on the seat 9 is disposed in front of the housing box 10. Therefore, the load acting on the seat 9 can be received by the load receiving member 10b without making the capacity of the housing box 10 smaller.

In this embodiment, the load receiving member 10b is formed into the shape corresponding to the shape of the outer surface of the fuel tank 11 and covering the fuel tank 11 while having a space interposed. Therefore, this can prevent the seat load from acting on the fuel tank 11. In addition, formation of a clearance and the like for the fuel tank 11 is not necessary. Accordingly, a required capacity of the fuel tank 11 can be certainly obtained.

In this embodiment, a plurality of openings 10g' through 10j' is formed on the load receiving member 10b. Therefore, the load receiving member 10b can be lightened. Further, each of the electrical parts can be maintained via the openings 10g' through 10j' without removing the load receiving member 10b.

The fuel cap 11 a is positioned to protrude upward from the central opening 10h', and a part of the fuel tank 11 is formed to swell out in the central opening 10h'. Therefore, fuel filling can be made without removing the load receiving member 10b, and the capacity of the fuel tank 11 can be increased with use of the central opening 10h'.

In this embodiment, the seat locking mechanisms 21 for locking the seat 9 in the fully closed position are disposed between the housing box 10 and the load receiving member 10b. Therefore, a seat locking mechanism 21 can be disposed while effectively using an available space between both of them.

The lock main bodies 21 a of the seat locking mechanisms 21 are mounted on the lower surfaces of the locking mechanism retaining parts 10r integrally formed on the load receiving member 10b. Therefore, mounting brackets for the lock main bodies 21 a are not required, and the lock main bodies 21 a can be disposed while effectively using an available space between the load receiving member 10b and the fuel tank 11.

In this embodiment, the load receiving member 10b is integrally formed on the housing box 10. The front mounting parts 10s are disposed at the front end of the load receiving member 10b. The front upper rear mounting parts 10t' formed on the housing box 10 are also used as the mounting parts for mounting the load receiving member 10b. Therefore, the points for mounting the load receiving member 10b on the vehicle body frame 2 can be reduced. For example, in the case that the load receiving member were formed as a separate body, it would be required to provide the mounting points in the front and rear of the load receiving member. There is a problem that numbers of parts and assembling processes would increase. In this embodiment, the load receiving member 10b is integrally formed on the housing box 10. Accordingly, a load acting on a part in the rear of the load receiving member 10b can be borne by the housing box 10, which makes it possible to mount the load receiving member 10b only at the front ends as the dedicated mounting points.

In this embodiment, the seat contacting parts 10u are disposed between the front mounting parts 10s and the rear mounting parts 10t' positioned front and up. Therefore, the load from the seat 9 acting on the seat contacting parts 10u can be transmitted to the vehicle body frame 2 via each of the mounting parts 10s and 10t'.

In this embodiment, the front mounting parts 10s and the seat contacting parts 10u are disposed on the right and left fore-and-aft frames 10k forming upwardly convex arches. Therefore, the load receiving member 10b can be prevented from deforming due to the load from the seat 9. In this case, the right and left fore-and-aft frames 10k are coupled together by the first through fourth coupling parts 10m through 10q extending in the vehicle width direction, and thus deformation of the load receiving member 10b due to the load from the seat 9 can be further reduced.

In the embodiment, the load receiving member 10b is integrally formed on the housing box 10. However, it is also possible to form the load receiving member as a body separate from the housing box. The seat load can be transmitted to the vehicle body frame without making the seat load act on the fuel tank in this case also.

The description above discloses (among others) an embodiment of a straddle type vehicle comprising: a vehicle body frame; a housing box disposed on the vehicle body frame; and a seat disposed in a manner such that it is capable of opening and closing an upper end opening of the housing box, wherein a rear end of the seat in a vehicle fore-and-aft direction is supported by the vehicle body frame via a hinge, and thereby the seat is swingable in an up-and-down direction, and a load receiving member for receiving a load acting on the seat is disposed in front of a volume part of the housing box.

Accordingly, the rear end of the seat is supported by the vehicle body frame via the hinge, and the load receiving member for receiving a load acting on the seat is disposed in front of the volume part of the housing box. Therefore, a load acting on the seat can be received without making a capacity of the housing box smaller.

Preferably, a tank for holding liquid is installed in front of the volume part of the housing box, and the load receiving member has a shape corresponding to a shape of an outer surface of the tank.

Preferably, the load receiving member has a plurality of openings.

Further, preferably a cap for opening or closing a liquid inlet of the tank is positioned on any of the openings.

Preferably, a locking mechanism for the seat is disposed between the volume part of the housing box and the load receiving member.

Further, preferably a lock main body of the locking mechanism disposed to the vehicle body frame is mounted on a locking mechanism retaining part integrally formed on the load receiving member or the housing box.

According ot another preferred aspect, the load receiving member has mounting parts disposed in a plurality of parts in the fore-and-aft direction, the mounting parts are supported by the vehicle body frame, and a seat contacting part with which the seat contacts is disposed in parts of the load receiving member between the mounting parts.

Further, preferably the mounting parts include a front mounting part and a rear mounting part, the seat contacting part is disposed between the front and the rear mounting parts, at least the seat contacting part among the seat contacting part, the front and the rear mounting parts is disposed on a fore-and-aft frame formed to extend in the vehicle fore-and-aft direction while forming an upwardly convex arch on the load receiving member.

Still further, preferably the fore-and-aft frame includes right and left fore-and-aft frames disposed on both right and left sides in the vehicle width direction, and the right and left fore-and-aft frames are coupled together by a coupling part extending in the vehicle width direction.

Also, further preferably a plurality of the coupling parts are disposed in the vehicle fore-and-aft direction at prescribed intervals.

According to another preferred aspect, the load receiving member is integrally formed on the housing box.

In order to provide a straddle type vehicle capable of receiving a load acting on a seat without making a box capacity smaller, it is suggested that a rear end of a seat 9 in the vehicle fore-and-aft direction is supported by a vehicle body frame 2 via a hinge member 50 swingably in the up-and-down direction. A load receiving member 10b for receiving the load acting on the seat 9 is disposed in front of a housing box 10.

## Claims

1. Straddle type vehicle, in particular motorcycle, comprising:
a vehicle body frame (2);
a housing box (10) disposed on the vehicle body frame (2);
a seat (9) capable of opening and closing a storage space (10a) of the housing box (10); and
a tank (11) for holding liquid installed in front of the storage space (10a) of the housing box (10) in longitudinal direction of the straddle type vehicle,
wherein a rear end of the seat (9) in longitudinal direction of the straddle type vehicle is supported by the vehicle body frame (2) via a hinge member (50), such that the seat (9) is swingable in up-and-down direction, and
a load receiving member (10b) configured to receive a load acting on the seat (9) is disposed in front of the storage space (10a) of the housing box (10) in longitudinal direction of the straddle type vehicle, said load receiving member (10b) covering at least a portion of a top of said tank (11).

2. Straddle type vehicle according to claim 1, wherein the load receiving member (10b) has a shape corresponding to a shape of an outer surface of the tank (11).

3. Straddle type vehicle according to claim 1 or 2, wherein a space is formed between the load receiving member (10b) and the tank (11) such that, preferably, the load receiving member (10b) covering at least a portion of the tank (11) does not contact same, even when a load is applied to the seat (9).

4. Straddle type vehicle according to one of claims 1 to 3, wherein the load receiving member (10b) has at least one, preferably a plurality of, openings (10g' to 10j').

5. Straddle type vehicle according to claim 4, wherein a cap (11a) for opening or closing a liquid inlet of the tank (11) is positioned on any of the openings (10g' to 10j').

6. Straddle type vehicle according to one of claims 1 to 5, wherein a seat locking mechanism (21) is disposed between the storage space (10a) of the housing box (10) and the load receiving member (10b).

7. Straddle type vehicle according to claim 6, wherein a lock main body (21 a) of the seat locking mechanism (21) being disposed to the vehicle body frame (2) is mounted on a locking mechanism retaining part (10r) which is, preferably integrally, formed on the load receiving member (10b) and/or the housing box (10).

8. Straddle type vehicle according to one of claims 1 to 7, wherein the load receiving member (10b) comprises mounting parts (10s,10t) disposed at several locations in longitudinal direction of the straddle type vehicle, said mounting parts (10s,10t) being preferably supported by the vehicle body frame (2).

9. Straddle type vehicle according to claim 8, wherein at least a seat contacting part (10u), with which the seat (9) is brought in contact when being closed, is disposed in at least a portion of the load receiving member (10b) between the mounting parts (10s,10t).

10. Straddle type vehicle according to claim 9, wherein the mounting parts (10s,10t) include at least a front mounting part (10s) and at least a rear mounting part (10t), the seat contacting part (10u) being disposed between the front and the rear mounting parts (10s,10t).

11. Straddle type vehicle according to one of claims 8 to 10, wherein the mounting parts (10s,10t) are disposed on a fore-and-aft frame (10k) extending in longitudinal direction of the straddle type vehicle, wherein the fore-and-aft frame (10k) preferably forms a substantially upwardly convex arch on the load receiving member (10b).

12. Straddle type vehicle according to claim 11, wherein the fore-and-aft frame (10k) includes right and left fore-and-aft frames disposed on both right and left sides in width direction of the straddle type vehicle, the right and left fore-and-aft frames being preferably coupled together by at least a coupling part (10m to 10q) extending in the width direction of the straddle type vehicle.

13. Straddle type vehicle according to claim 12, wherein a plurality of the coupling parts (10m to 10q) are disposed in longitudinal direction of the straddle type vehicle at prescribed intervals.

14. Straddle type vehicle according to one of claims 1 to 13, wherein the load receiving member (10b) is integrally formed on the housing box (10).

## Patentansprüche

1. Fahrzeug vom Spreizsitz- Typ, insbesondere ein Motorrad, aufweisend:
einen Fahrzeugkarosserierahmen (2);
einen Unterbringungskasten (10), angeordnet in dem Fahrzeugkarosserierahmen (2);
einen Sitz (9), der in der Lage ist einen Aufbewahrungsraum (10a) des Unterbringungskastens (10) zu öffnen oder zu schließen; und
einen Tank (11) zum Halten von Flüssigkeit, installiert vor dem Aufbewahrungsraum (10a) des Unterbringungskastens (10) in Längsrichtung des Fahrzeuges vom Spreizsitz- Typ,
wobei ein hinteres Ende des Sitzes (9) in Längsrichtung des Fahrzeuges vom Spreizsitz- Typ durch den Fahrzeugkarosserierahmen (2) über ein Gelenkteil (50) derart gelagert ist, dass ein Sitz (9) in Auf- oder- Ab- Richtung schwingbar und
ein Lastaufnahmeteil (10b) konfiguriert ist, eine Last aufzunehmen, die auf den Sitz (9) wirkt, angeordnet vor dem Aufbewahrungsraum (10a) des Unterbringungskastens (10) in Längsrichtung des Fahrzeuges vom Spreizsitz- Typ, wobei das Lastaufnahmeteil (10b) zumindest einen Abschnitt einer Oberseite des Tanks (11) abdeckt.

2. Fahrzeug vom Spreizsitz- Typ nach Anspruch 1, wobei das Lastaufnahmeteil (10b) eine Form entsprechend einer Form einer Außenoberfläche des Tanks (11) hat.

3. Fahrzeug vom Spreizsitz- Typ nach Anspruch 1 oder 2, wobei ein Raum zwischen dem Lastaufnahmeteil (10b) und dem Tank (11) vorzugsweise derart gebildet ist, dass das Lastaufnahmeteil (10b), das zumindest einen Abschnitt des Tanks (11) abdeckt, denselben selbst dann nicht berührt, wenn eine Last auf den Sitz (9) aufgebracht wird.

4. Fahrzeug vom Spreizsitz- Typ nach Anspruch 1 bis 3, wobei das Lastaufnahmeteil (10b) zumindest eine, vorzugsweise ein Mehrzahl von Öffnungen (10g' bis 10j') hat.

5. Fahrzeug vom Spreizsitz- Typ nach Anspruch 4, wobei eine Kappe (11 a) zum Öffnen oder Schließen eines Einlasses des Tanks (11) an einer der Öffnungen (10g' bis 10j') positioniert ist.

6. Fahrzeug vom Spreizsitz- Typ nach einem der Ansprüche 1 bis 5, wobei eine Sitzverriegelungsvorrichtung (21) zwischen dem Aufbewahrungsraum (10a) des Unterbringungskastens (10) und dem Lastaufnahmeteil (10b) angeordnet ist.

7. Fahrzeug vom Spreizsitz- Typ nach Anspruch 6, wobei ein Verriegelungshauptkörper (21 a) der Sitzverriegelungsvorrichtung (21), der an dem Fahrzeugkarosserierahmen (2) angeordnet ist, an einem Verriegelungsvorrichtungs- Rückhalteteil (10r) montiert ist, das, vorzugsweise einstückig, an dem Lastaufnahmeteil (10b) und / oder dem Unterbringungskasten (10) gebildet ist.

8. Fahrzeug vom Spreizsitz- Typ nach einem der Ansprüche 1 bis 7, wobei das Lastaufnahmeteil (10b) Montageteile (10s, 10t) aufweist, angeordnet an verschiedenen Orten in Längsrichtung des Fahrzeuges vom Spreizsitz- Typ, wobei die Montageteile (10s, 10t) vorzugsweise durch den Fahrzeugkarosserierahmen (2) gelagert werden.

9. Fahrzeug vom Spreizsitz- Typ nach Anspruch 8, wobei zumindest ein Sitzkontaktteil (10u), mit dem der Sitz (9), wenn geschlossen, in Kontakt gebracht wird, in zumindest einem Abschnitt des Lastaufnahmeteils (10b) zwischen den Montageteilen (10s, 10t) angeordnet ist.

10. Fahrzeug vom Spreizsitz- Typ nach Anspruch 9, wobei die Montageteile (10s, 10t) zumindest ein vorderes Montageteil (10s) und zumindest ein hinteres Montageteil (10t) enthalten, wobei das Sitzkontaktteil (10u) zwischen den vorderen und hinteren Montageteilen (10s, 10t) angeordnet ist.

11. Fahrzeug vom Spreizsitz- Typ nach einem der Ansprüche 8 bis 10, wobei die Montageteile (10s, 10t) an einem nach- vorn- und nach- hinten Rahmen (10k) angeordnet sind, der sich in Längsrichtung des Fahrzeuges vom Spreizsitz- Typ erstreckt, wobei der nach- vorn- und nach- hinten Rahmen (10k) vorzugsweise im Wesentlichen nach oben konvexe Bögen an dem Lastaufnahmeteil (10b) bildet.

12. Fahrzeug vom Spreizsitz- Typ nach Anspruch 11, wobei der nach- vorn- nachhinten Rahmen (10k) rechte und linke nach- vorn- und nach- hinten Rahmen enthält, angeordnet auf sowohl der rechten und linken Seite in Richtung der Breite des Fahrzeuges vom Spreizsitz- Typ, wobei die rechten und linken nach- vorn- und nach- hinten Rahmen vorzugsweise zusammen durch ein Kupplungsteil (10m bis 10q) gekuppelt sind, das sich in Richtung der Breite des Fahrzeuges vom Spreizsitz- Typ erstreckt.

13. Fahrzeug vom Spreizsitz- Typ nach Anspruch 12, wobei eine Mehrzahl der Kupplungsteile (10m bis 10q) in Längsrichtung des Fahrzeuges vom Spreizsitz- Typ in vorgeschriebenen Intervallen angeordnet ist.

14. Fahrzeug vom Spreizsitz- Typ nach einem der Ansprüche 1 bis 13, wobei das Lastaufnahmeteil (10b) einstückig an dem Unterbringungskasten (10) gebildet ist.

## Revendications

1. Véhicule de type à enfourcher, en particulier, une motocyclette, comprenant :
un châssis de caisse (2) de véhicule ;
un boîtier (10) disposé sur le châssis de caisse (2) de véhicule ;
un siège (9) pouvant ouvrir et fermer un espace de rangement (10a) du boîtier (10) ; et
un réservoir (11) pour contenir le liquide installé en face de l'espace de rangement (10a) du boîtier (10) dans la direction longitudinale du véhicule de type à enfourcher,
dans lequel une extrémité arrière du siège (9) dans la direction longitudinale du véhicule de type à enfourcher est supportée par le châssis de caisse (2) de véhicule via un élément de charnière (50), de sorte que la siège (9) peut pivoter dans la direction qui monte et qui descend, et
un élément de réception de charge (10b) configuré pour recevoir une charge agissant sur le siège (9) est disposé en face de l'espace de rangement (10a) du boîtier (10) dans la direction longitudinale du véhicule de type à enfourcher, ledit élément de réception de charge (10b) recouvrant au moins une partie d'une partie supérieure dudit réservoir (11).

2. Véhicule de type à enfourcher selon la revendication 1, dans lequel l'élément de réception de charge (10b) a une forme correspondant à une forme d'une surface externe du réservoir (11).

3. Véhicule de type à enfourcher selon la revendication 1 ou 2, dans lequel un espace est formé entre l'élément de réception de charge (10b) et le réservoir (11) de sorte que, de préférence, l'élément de réception de charge (10b) recouvrant au moins une partie du réservoir (11) n'est pas en contact avec cette dernière, même lorsqu'une charge est appliquée sur le siège (9).

4. Véhicule de type à enfourcher selon l'une quelconque des revendications 1 à 3, dans lequel l'élément de réception de charge (10b) a au moins une, de préférence une pluralité d'ouvertures (10g' à 10j').

5. Véhicule de type à enfourcher selon la revendication 4, dans lequel un capuchon (11a) pour ouvrir ou fermer une entrée de liquide du réservoir (11) est positionné sur l'une quelconque des ouvertures (10g' à 10j').

6. Véhicule de type à enfourcher selon l'une quelconque des revendications 1 à 5, dans lequel un mécanisme de verrouillage de siège (21) est disposé entre l'espace de stockage (10a) du boîtier (10) et l'élément de réception de charge (10b).

7. Véhicule de type à enfourcher selon la revendication 6, dans lequel un corps principal de verrouillage (21a) du mécanisme de verrouillage de siège (21) qui est disposé sur le châssis de caisse (2) de véhicule est monté sur une partie de retenue de mécanisme de verrouillage (10r) qui est formée, de préférence de manière solidaire, sur l'élément de réception de charge (10b) et/ou le boîtier (10).

8. Véhicule de type à enfourcher selon l'une quelconque des revendications 1 à 7, dans lequel l'élément de réception de charge (10b) comprend des parties de montage (10s, 10t) disposées à plusieurs emplacements dans la direction longitudinale du véhicule de type à enfourcher, lesdites parties de montage (10s, 10t) étant de préférence supportées par le châssis de caisse (2) de véhicule.

9. Véhicule de type à enfourcher selon la revendication 8, dans lequel au moins une partie de contact de siège (10u), avec laquelle le siège (9) est amené en contact lorsqu'il est fermé, est disposée dans au moins une partie de l'élément de réception de charge (10b) entre les parties de montage (10s, 10t).

10. Véhicule de type à enfourcher selon la revendication 9, dans lequel les parties de montage (10s, 10t) comprennent au moins une partie de montage avant (10s) et au moins une partie de montage arrière (10t), la partie de contact de siège (10u) étant disposée entre les parties de montage avant et arrière (10s, 10t).

11. Véhicule de type à enfourcher selon l'une quelconque des revendications 8 à 10, dans lequel les parties de montage (10s, 10t) sont disposées sur un châssis longitudinal (10k) s'étendant dans la direction longitudinale du véhicule de type à enfourcher, dans lequel le châssis longitudinal (10k) forme de préférence un arc convexe sensiblement vers le haut sur l'élément de réception de charge (10b).

12. Véhicule de type à enfourcher selon la revendication 11, dans lequel le châssis longitudinal (10k) comprend des châssis longitudinaux droit et gauche disposés sur les côtés droit et gauche dans le sens de la largeur du véhicule de type à enfourcher, les châssis longitudinaux droit et gauche étant de préférence couplés ensemble par au moins une partie de couplage (10m à 10q) s'étendant dans le sens de la largeur du véhicule de type à enfourcher.

13. Véhicule de type à enfourcher selon la revendication 12, dans lequel une pluralité des parties de couplage (10m à 10q) sont disposées dans la direction longitudinale du véhicule de type à enfourcher à intervalles prescrits.

14. Véhicule de type à enfourcher selon l'une des revendications 1 à 13, dans lequel l'élément de réception de charge (10b) est formé de manière solidaire sur le boîtier (10).
